# EUROPEAN PATENT SPECIFICATION

(11) **EP 2 259 507 B1**
(45) Date of publication and mention of the grant of the patent: **03.08.2016**
(21) Application number: 09730726.8
(22) Date of filing: 30.03.2009
(51) Int. Cl.: H04L 29/08

(54) **METHOD AND DEVICE FOR CONTROLLING A NODE TO JOIN IN A PEER-TO-PEER NETWORK**
VERFAHREN UND GERÄT ZUR KONTROLLE EINER STATION ZUR TEILNAHME AN EINEM PEER-TO-PEER NETZ
PROCÉDÉ ET DISPOSITIF DE CONTRÔLE DE LA JONCTION D'UN NOEUD DANS UN RÉSEAU POSTE À POSTE

(30) Priority: 11.04.2008 CN 200810103905
(43) Date of publication of application: 08.12.2010
(73) Proprietor: Huawei Technologies Co., Ltd., Longgang District Shenzhen, Guangdong 518129 (CN)
(72) Inventor: ZHENG, Hewen, Longgang District 518129, Shenzhen (CN)
(74) Representative: Körber, Martin Hans
(86) International application number: PCT/CN2009/071080
(87) International publication number: WO 2009/124482

(56) References cited:
- CN-A- 101 035 270
- CN-A- 101 060 455
- US-A1- 2004 083 304
- US-A1- 2004 181 575
- US-A1- 2007 233 832
- ZHU D ET AL: "Promoting cooperation among strangers to access Internet services from an ad hoc network", PERVASIVE AND MOBILE COMPUTING, ELSEVIER, NL, vol. 1, no. 2, 1 July 2005 (2005-07-01), pages 213-236, XP025339544, ISSN: 1574-1192, DOI: DOI:10.1016/J.PMCJ.2005.03.002 [retrieved on 2005-07-01]
- WEN JI ET AL: "GARM: A Group - Anonymity Reputation Model in Peer-to-Peer System", GRID AND COOPERATIVE COMPUTING, 2007. GCC 2007. SIXTH INTERNATIONAL CO NFERENCE ON, IEEE, PI, 1 August 2007 (2007-08-01), pages 481-488, XP031129142, ISBN: 978-0-7695-2871-7

## Description

### Field of the Invention

The present invention relates to Peer-to-Peer (P2P) network technologies, and in particular, to a method and apparatus for controlling a peer to join a P2P network.

### Background of the Invention

A P2P network is made up of interconnected independent nodes, which are known as peers. A peer has an independent and unique identity in the P2P network, and the identity is known as a peer ID. A resource stored in a P2P network through a distributed storage service has its independent ID in the P2P network, and the ID is known as a resource ID.

P2P networks are self-organized and self-managed networks. Peers (including peers and clients) can join and leave a P2P network freely, which makes the P2P network well extensible. Generally, a centralized enrollment server is introduced into the P2P network to control joining of peers, and is responsible for allocating an ID to a peer requesting to join the network, and for specifying a secure bootstrap peer. The process of a peer joining a P2P network is different from the process of a client joining the P2P network. When the peer requests to join the P2P network, the joining peer communicates with the enrollment server first. After being admitted, the joining peer obtains the allocated peer ID and a list of specified secure bootstrap peers, and then sends a Join request message to the selected bootstrap peer; the bootstrap peer uses a P2P routing mode to forward the Join request message on the P2P network until an admitting peer in charge of the identification of the peer receives the Join request message and returns a response message, thus creating a connection between the joining peer and the admitting peer. The admitting peer is the peer whose ID is closest to the ID of the joining peer in the ID space of the P2P network. When the client requests to join the P2P network, the client communicates with the enrollment server first to undergo authentication and authorization and obtain the association address of the candidate associated peer and the possible client ID, and then sends an Inquire request message to every candidate associated peer; the client sends a Join request message for joining the P2P network to the selected associated peer according to the information about the P2P network services available from the associated peer in the Inquire response message, where the information is returned by the candidate associated peer and examples of the information are a Distributed Hash Table (DHT) algorithm and the associated node state information; and the associated peer returns a response message which permits the client to join the P2P network, thus completing the connection creation.

When the peer leaves the P2P network, other peers need to know the information about the leaving peer, and then update the routing table to prevent persistence of the routing black hole (namely, unreachable or inaccessible ID space). However, before convergence of routes of peers in the P2P network, the routing black hole is inevitable. This process is route flapping. If a malicious peer joins and leaves the P2P network frequently and does not move the resources stored by this peer to other peers when leaving the P2P network, which gives rise to unreachable black holes in the routing space of the P2P network, and a lot of resources stored on the P2P network become unavailable or are even lost; besides, frequent joining and leaving of the malicious peer increases the processing load of the peer, and the peer is so busy that Denial of Service (DoS) occurs. Evidently, free joining and leaving of the peer in the P2P network affects availability of the routes and resources of the P2P network directly.

The prior art provides two methods to restrict frequent joining of a malicious peer in a P2P network. The first method is to throw a puzzle to the peer that attempts to join the P2P network after receiving a Join request from the peer, and allow the peer to join the P2P network only if the peer gives a correct answer to the puzzle, thus restricting the frequency of the peer joining the P2P network. Another method is to back up the resources through a replication and redistribution mechanism when the resources are distributed onto the P2P network for distributed storage. In this way, even if a malicious peer joins and leaves the P2P network frequently, such resources are still available.

The prior art has the following limitations.

The first method above largely depends on the puzzle mechanism applied, and involves storage of numerous puzzles, thus generating a great overhead during the implementation; and the malicious peer which gives the correct answer is still capable of joining the P2P network frequently. For example, if the puzzle requires the joining peer to give the number hidden in a picture, the method is futile if the malicious peer succeeds in identifying the number hidden in the picture through a picture identification technology. The second method is incapable of eliminating the route flapping, signaling overhead and possible DoS generated when the malicious peer joins the P2P network frequently. Moreover, if the malicious peer joins the P2P network repeatedly and carries the distributed resources and their backup away when leaving the P2P network, the resources are still unavailable or even lost.

US 2007/0233832 A1 describes a method for joining a network resource as a joining node to a peer-to-peer network. The method includes: establishing a node ID for the joining node to be joined to the peer-to-peer network, routing the join message to an assignment node that manages resources with resource IDs closest to the node ID of the joining node, determining whether or not the node ID established is identical to respective ones of the node IDs on the peer-to-peer network, and joining the joining node to the peer-to-peer network, when the node ID of the joining node is not identical to any one of the node IDs on the peer-to-peer network.

### Summary of the Invention

To restrict frequent joining of a peer, the present invention provides a method and apparatus for controlling a peer to join a P2P network. The technical solution under the present invention is as follows:
According to the first aspect of the present invention a method for controlling a peer to join a P2P network includes:
   receiving a request for joining the P2P network from the peer; and
   refusing the peer to join the P2P network if determining that the peer is not allowed to join the P2P network according to history information of the peer joining the P2P network;
   wherein the step of refusing the peer to join the P2P network if determining that the peer is not allowed to join the P2P network according to the history information of the peer joining the P2P network comprises: judging whether the number of requests for joining the P2P network received from the peer within a specified period is higher than a preset first threshold, and, if so, refusing the peer to join the P2P network.

According to the second aspect of the present invention, a method for controlling a peer to join a Peer-to-Peer, P2P, network includes:
receiving a request for joining the P2P network from the peer; and
refusing the peer to join the P2P network if determining that the peer is not allowed to join the P2P network according to history information of the peer joining the P2P network;
wherein the step of refusing the peer to join the P2P network if determining that the peer is not allowed to join the P2P network according to the history information of the peer joining the P2P network comprises:
   judging whether an average duration of the peer staying on the P2P network for multiple times is lower than a preset second threshold, and, if so, refusing the peer to join the P2P network.

According to the third aspect of the present invention, a method for controlling a peer to join a Peer-to-Peer, P2P, network includes:
receiving a request for joining the P2P network from the peer; and
refusing the peer to join the P2P network if determining that the peer is not allowed to join the P2P network according to history information of received requests for joining the P2P network;
wherein the step of refusing the peer to join the P2P network if determining that the peer is not allowed to join the P2P network according to the history information of received requests.for joining the P2P network comprises:
   judging whether the number of all requests for joining the P2P network received within a specified period is higher than a preset third threshold, and, if so, refusing the peer to join the P2P network.

According to the fourth aspect of the present invention an apparatus for controlling a peer to join a P2P network includes:
a receiving module, adapted to receive a request for joining the P2P network from the peer; and
a processing module, adapted to refuse the peer to join the P2P network if determining that the peer is not allowed to join the P2P network according to history information of the peer joining the P2P network;
wherein the processing module comprises: a first processing unit, adapted to: judge whether the number of requests for joining the P2P network received from the peer within a specified period is higher than a preset first threshold after the receiving module receives the request, and, if so, refuse the peer to join the P2P network.

According to the fifth aspect of the present invention an apparatus for controlling a peer to join a Peer-to-Peer, P2P, network, comprising:
a receiving module, adapted to receive a request for joining the P2P network from the peer; and
a processing module, adapted to refuse the peer to join the P2P network if determining that the peer is not allowed to join the P2P network according to history information of received requests for joining the P2P network after the receiving module receives the request;
wherein the processing module comprises: a second processing unit, adapted to: judge whether an average duration of the peer staying on the P2P network for multiple times is lower than a preset second threshold after the receiving module receives the request, and, if so, refuse the peer to join the P2P network.

According to the sixth aspect of the present invention an apparatus for controlling a peer to join a Peer-to-Peer, P2P, network, comprising:
a receiving module, adapted to receive a request for joining the P2P network from the peer; and
a processing module, adapted to refuse the peer to join the P2P network if determining that the peer is not allowed to join the P2P network according to at least one of history information of the peer joining the P2P network and history information of received requests for joining the P2P network after the receiving module receives the request;
wherein the processing module comprises: a third processing unit, adapted to: judge whether the number of all requests for joining the P2P network received within a specified period is higher than a preset third threshold after the receiving module receives the request, and, if so, refuse the peer to join the P2P network.

The technical solution under the present invention judges the legality of the peer according to history information of the peer joining the P2P network and/or history information of received requests for joining the P2P network, and refuses the peer to join the P2P network if determining that the peer is not allowed to join the P2P network, thus controlling the peer to join the P2P network and restricting the peer from joining the P2P network frequently. The route flapping of the P2P network, unavailability or even loss of resources, and DoS of peers caused by frequent attempts of the malicious peer to join the P2P network are overcome to some extent. Compared with the puzzle mechanism in the prior art, the technical solution under the present invention does not need to store a lot of puzzles, saves the overhead significantly, and brings better control effects.

### Brief Description of the Drawings

FIG. 1 is a flowchart of a method for controlling a peer to join a P2P network in an embodiment of the present invention;
FIG. 2 is another flowchart of a method for controlling a peer to join a P2P network in an embodiment of the present invention;
FIG. 3 shows a structure of a P2P network provided in an embodiment of the present invention;
FIG. 4 is a flowchart of a peer joining a P2P network in an embodiment of the present invention;
FIG. 5 is a flowchart of a client joining a P2P network in an embodiment of the present invention;
FIG. 6 shows a structure of an apparatus for controlling a peer to join a P2P network in an embodiment of the present invention;
FIG. 7 shows another structure of an apparatus for controlling a peer to join a P2P network in an embodiment of the present invention; and
FIG. 8 shows another structure of an apparatus for controlling a peer to join a P2P network in an embodiment of the present invention.

### Detailed Description of the Embodiments

To make the technical solution, objectives and merits of the present invention clearer, the following describes the embodiments of the present invention in more detail with reference to accompanying drawings.

The method for controlling a peer to join a P2P network in an embodiment of the present invention refuses the peer to join the P2P network if determining that the peer is not allowed to join the P2P network according to history information of the peer joining the P2P network and/or history information of received requests for joining the P2P network after receiving a request for joining the P2P network from the peer.

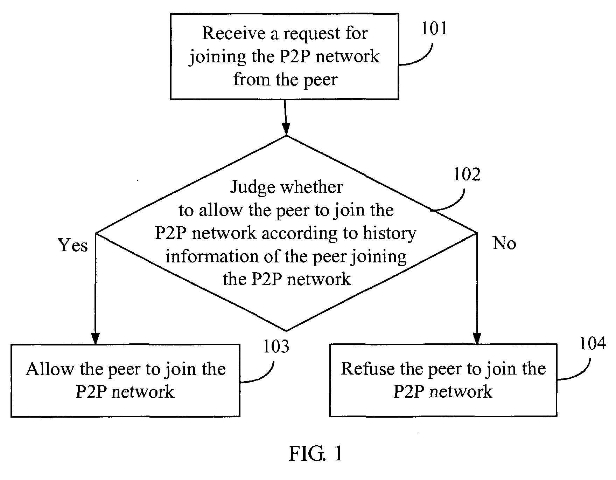

FIG. 1 is a flowchart of a method for controlling a peer to join a P2P network in an embodiment of the present invention. The method includes:
101. Receive a request for joining the P2P network from the peer.
102. Judge whether to allow the peer to join the P2P network according to history information of the peer joining the P2P network; if so, perform step 103; if not, perform step 104.
   The step of judging whether to allow the peer to join the P2P network according to the history information of the peer joining the P2P network may be performed in many ways, including but without limitation to:
   (1) Judge whether the number of requests for joining the P2P network received from the peer within a specified period is higher than a preset first threshold; if so, refuse the peer to join the P2P network; if not, allow the peer to join the P2P network.
   (2) Judge whether the average duration of the peer staying on the P2P network for multiple times is lower than a preset second threshold; if so, refuse the peer to join the P2P network; if not, allow the peer to join the P2P network.

   The specified period, the first threshold, and the second threshold may be set as required. For example, the specified period is set to 1 hour, the first threshold is set to 10, and the second threshold is set to 5 minutes. If the two modes above are applied concurrently, the two modes are not sequence-sensitive.
   Moreover, the P2P network mentioned in the history information of the peer joining the P2P network may be a specified P2P network, for example, the P2P network that the peer requests to join, or may be all P2P networks.
103. Allow the peer to join the P2P network, and accordingly, return a response to the peer, and send information such as the ID allocated to this peer and the list of bootstrap peers to the peer, and then terminate the process.
104. Refuse the peer to join the P2P network, and optionally, discard the request, and then record the event into logs or generate alarm information, and terminate the process.

Further, optionally, after the joining of the peer to the P2P network is refused, notify the peer to request to join the P2P network again. For example, when the local device is busy, reject this request of the peer, and set a 30-minute delay, namely, notify the peer to request to join the P2P network again after 30 minutes.

Further, optionally, record the information about this request for joining the P2P network such as a control result (refuse or allow the peer to join) into the stored history information of the peer joining the P2P network, where the control result serves as a judging basis when a request for joining the P2P network is received subsequently.

The method provided in this embodiment judges the legality of the peer according to history information of the peer joining the P2P network, and refuses the peer to join the P2P network if determining that the peer is not allowed to join the P2P network, thus controlling the peer to join the P2P network and restricting the peer from joining the P2P network frequently. The route flapping of the P2P network, unavailability or even loss of resources, and DoS of peers caused by frequent attempts of the malicious peer to join the P2P network are overcome to some extent. Compared with the puzzle mechanism in the prior art, the method provided in this embodiment does not need to store a lot of puzzles, saves the overhead significantly, and brings better control effects. The judgment about whether the peer is allowed to join the P2P network may be based on the frequency of receiving the requests, or the stay duration of the peer, or a combination thereof, which is convenient and easy to implement, and flexible.

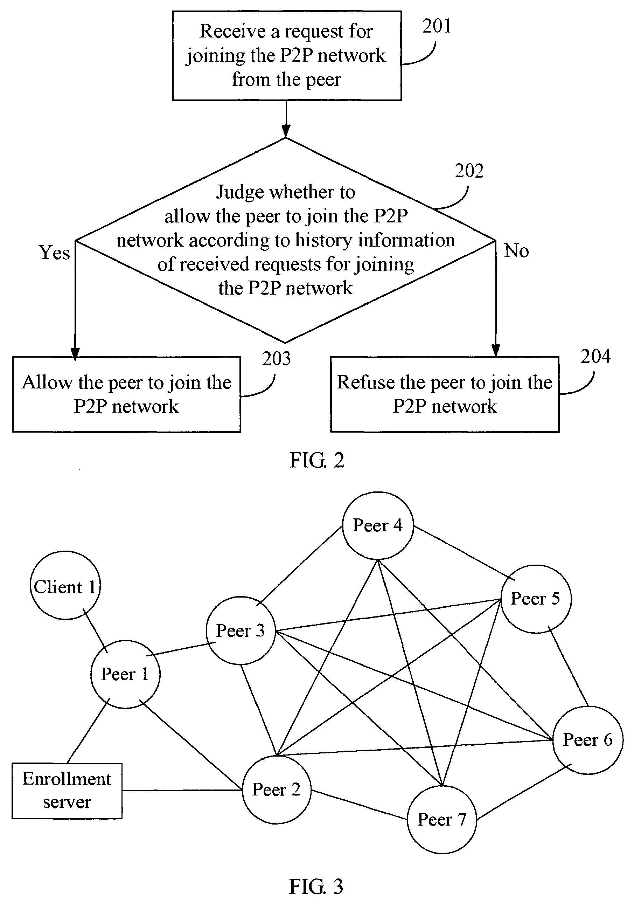

FIG. 2 is another flowchart of a method for controlling a peer to join a P2P network in an embodiment of the present invention. The method includes:
201. Receive a request for joining the P2P network from the peer.
202. Judge whether to allow the peer to join the P2P network according to history information of received requests for joining the P2P network; if so, perform step 203; if not, perform step 204.
   The step of judging whether to allow the peer to join the P2P network according to the history information of received requests for joining the P2P network may be performed in many ways, including but without limitation to:
   Judge whether the number of all requests for joining the P2P network received within a specified period (namely, the average frequency of all peers joining the P2P network) is higher than a preset third threshold; if so, refuse the peer to join the P2P network; if not, allow the peer to join the P2P network.

   The specified period and the third threshold may be set as required. For example, the specified period is set to 1 hour, and the third threshold is set to 50.
   Besides, the P2P network mentioned in the history information of received requests for joining the P2P network may be a specified P2P network, for example, the P2P network that the peer requests to join, or may be all P2P networks.
203. Allow the peer to join the P2P network, and accordingly, return a response to the peer, and send information such as the ID allocated to this peer and the list of bootstrap peers to the peer, and then terminate the process.
204. Refuse the peer to join the P2P network, and optionally, discard the request, and then record the event into logs or generate alarm information, and terminate the process.

Further, optionally, after the joining of the peer to the P2P network is refused, notify the peer to request to join the P2P network again after a specified period.

Further, optionally, record the information about this request for joining the P2P network such as a control result (refuse or allow the peer to join) into the stored history information of requests for joining the P2P network, where the control result serves as a judging basis when a request for joining the P2P network is received subsequently.

The method provided in this embodiment judges the legality of the peer according to history information of received requests for joining the P2P network, and refuses the peer to join the P2P network if determining that the peer is not allowed to join the P2P network, thus controlling the peer to join the P2P network and restricting the peer from joining the P2P network frequently. The route flapping of the P2P network, unavailability or even loss of resources, and DoS of peers caused by frequent attempts of the malicious peer to join the P2P network are overcome to some extent. Compared with the puzzle mechanism in the prior art, the method provided in this embodiment does not need to store a lot of puzzles, saves the overhead significantly, and brings better control effects. The judgment about whether the peer is allowed to join the P2P network is convenient and easy to implement, and flexible.

To achieve better control effects, the technical solution in FIG. 1 may be combined with the technical solution in FIG. 2. That is, a judgment is made about whether to allow the peer to join the P2P network according to history information of the peer joining the P2P network and a judgment is made according to history information of received requests for joining the P2P network. The two judgment processes are not sequence-sensitive. That is, the judgment based on the history information of the peer joining the P2P network is made first, or the judgment based on the history information of received requests for joining the P2P network is made first. The detailed judgment process and the subsequent processing are the same as the relevant description in the foregoing embodiment. Through the two judgment processes above, better control effects can be achieved; the peer is prevented from joining the P2P network too frequently; the route flapping of the 2P network, unavailability or even loss of resources, and DoS of peers caused by frequent joining of a malicious peer can be overcome to some extent.

The judgment about the peer requesting to join the P2P network and the corresponding processing function in the technical solutions provided in all embodiments above can be integrated on an enrollment server in the P2P network, or integrated on a peer of the P2P network such as a bootstrap peer or a peer that provides P2P network services for the client. When such functions are integrated on a peer, the peer can obtain the history information of the joining peer from the enrollment server; if the peer (such as a gateway) is fixed relatively to the joining peer in the network deployment, the peer can collect the history information of the joining peer; and all peers can use the history information of the joining peer as a resource record, and store the resource record onto the P2P network through a distributed storage service of the P2P network. In this way, the history information can be obtained from the P2P network conveniently when necessary.

For example, as shown in FIG. 3, the P2P network has 7 peers, namely, peer 1 to peer 7; and the enrollment server is connected to peer 1 and peer 2 respectively. When peer 1 requests to join the P2P network, the enrollment server that integrates the foregoing functions makes the judgment and takes subsequent actions, or another peer such as peer 2 that integrates the foregoing functions makes the judgment and takes subsequent actions.

In a P2P Session Initiation Protocol (SIP) network reference model, a peer can be integrated with the SIP functions, for example, the SIP proxy server function, SIP Redirect server function, SIP User Agent (UA) function, and signaling gateway function. The client is generally integrated with the SIP UA function. Peers communicate with each other through the P2P SIP Peer Protocol. A client communicates with a peer integrated with no SIP function through the P2P SIP Client Protocol. The SIP UA communicates with a peer integrated with the SIP proxy server function or SIP Redirect server function through SIP.

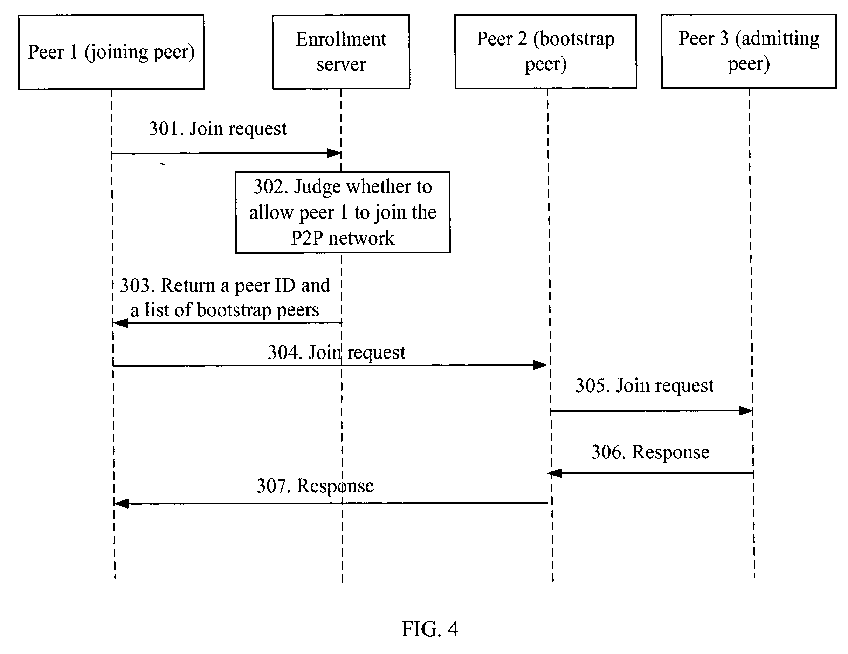

The following describes the process of a peer and a client joining a P2P network respectively, taking the P2P SIP network reference model as an example. FIG. 4 is a flowchart of a peer joining a P2P network. Supposing peer 1 shown in FIG. 3 requests to join the P2P network, the process includes the following steps:
301. Peer 1 sends a Join request for joining the P2P network to the enrollment server.
302. The enrollment server judges whether to allow peer 1 to join the P2P network according to the foregoing method, and, if not, refuses peer 1 to join the P2P network and discards the Join request.
303. If peer 1 is allowed to join the P2P network, the enrollment server returns the information such as a peer ID allocated to peer 1 and a list of bootstrap peers.
304. Peer 1 sends a Join request to peer 2 (a bootstrap peer specified by the enrollment server for peer 1).
305. Peer 2 forwards the Join request to peer 3 (an admitting peer in charge of the identification of peer 1).
306. Peer 3 returns a response to peer 2.
307. Peer 2 forwards the response to peer 1. In this way, a connection is created between peer 1 and peer 3, and peer 1 joins the P2P network.

With the foregoing method for controlling the peer to join the P2P network, the malicious peer is restricted from joining the P2P network frequently; and the route flapping of the P2P network, unavailability or even loss of resources, and DoS of peers caused by frequent attempts of the malicious peer to join the P2P network are overcome to some extent.

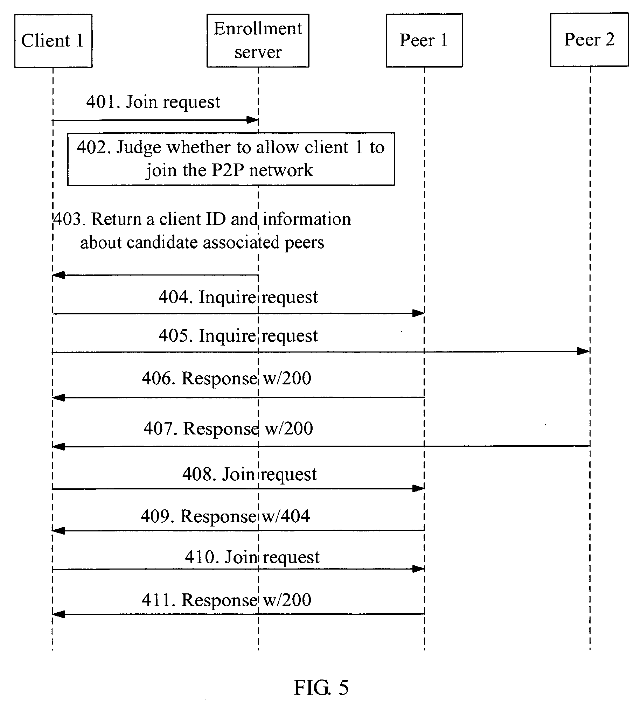

FIG. 5 is a flowchart of a client joining a P2P network. Supposing client 1 shown in FIG. 3 requests to join the P2P network, the process includes the following steps:
401. Client 1 sends a Join request for joining the P2P network to the enrollment server.
402. The enrollment server judges whether to allow client 1 to join the P2P network according to the foregoing method, and, if not, refuses client 1 to join the P2P network and discards the request.
403. If client 1 is allowed to join the P2P network, the enrollment server returns the information such as a client ID allocated to client 1 and a list of candidate associated peers. The candidate associated peers include peer 1 and peer 2.
404. Client 1 sends an Inquire request to peer 1.
405. Client 1 sends an Inquire request to peer 2.
406. Peer 1 returns a response to client 1. The response carries the information about the P2P network services available from peer 1, for example, a DHT algorithm and state information of peer 1.
   For example, the response carries a response code 200, expressed as "w/200" (with response code 200).
407. Peer 2 returns a response to client 1. The response carries the information about the P2P network services available from peer 2, for example, a DHT algorithm and state information of peer 2.
408. Client 1 selects peer 1 as an associated peer according to the received information, and sends a Join request to peer 1.
409. Peer 1 returns a response. If the Join request sent by client 1 does not carry the identity information required for authentication, peer 1 sends a response that carries a response code 404 to client 1, instructing client 1 to provide the identity information.
   "w/404" may be used to express the meaning of carrying a response code 404.
410. Client 1 sends a Join request that carries identity information to peer 1.
411. Peer 1 returns a response. In this way, a connection is created between client 1 and peer 1, and client 1 joins the P2P network.

If client 1 provides the identity information in step 408, peer 1 returns a response to finish creating a connection to client 1 in step 409, without sending the response to client 1 or performing step 410 or step 411.

With the foregoing method for controlling the client to join the P2P network, the malicious client is restricted from joining the P2P network frequently; and the performance deterioration of the peer connected to the client directly or even DoS of the peer caused by frequent attempts of the malicious client to join the P2P network are overcome to some extent.

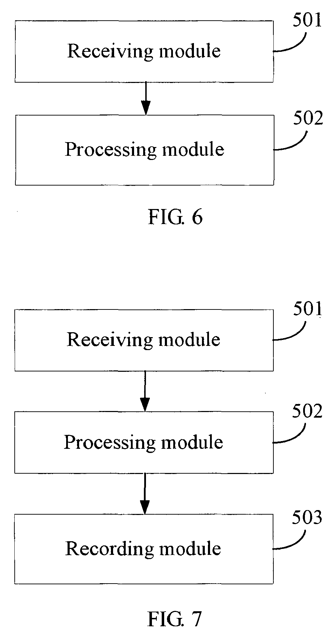

As shown in FIG. 6, an apparatus for controlling a peer to join a P2P network in an embodiment of the present invention includes:
a receiving module 501, adapted to receive a request for joining the P2P network from the peer; and
a processing module 502, adapted to refuse the peer to join the P2P network if determining that the peer is not allowed to join the P2P network according to history information of the peer joining the P2P network and/or history information of received requests for joining the P2P network after the receiving module 501 receives the request.

The processing module 502 includes:
a first processing unit, adapted to: judge whether the number of requests for joining the P2P network received from the peer within a specified period is higher than a preset first threshold after the receiving module receives the request, and, if so, refuse the peer to join the P2P network.

Alternatively, the processing module 502 includes:
a second processing unit, adapted to: judge whether the average duration of the peer staying on the P2P network for multiple times is lower than a preset second threshold after the receiving module receives the request, and, if so, refuse the peer to join the P2P network.

Alternatively, the processing module 502 includes:
a third processing unit, adapted to: judge whether the number of all requests for joining the P2P network received within a specified period is higher than a preset third threshold after the receiving module receives the request, and, if so, refuse the peer to join the P2P network.

As shown in FIG. 7, the apparatus further includes:
a recording module 503, adapted to record information about this request for joining the P2P network from the peer after the processing module 502 refuses the peer to join the P2P network.

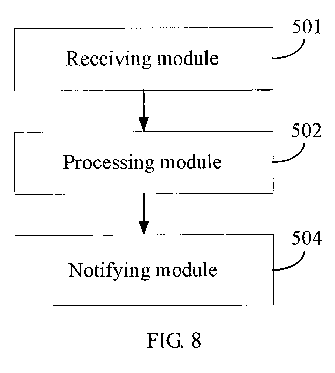

As shown in FIG. 8, the apparatus may further include:
a notifying module 504, adapted to notify the peer to request to join the P2P network again after a specified period after the processing module 502 refuses the peer to join the P2P network.

The apparatus provided in this embodiment judges the legality of the joining peer, and refuses the peer to join the P2P network if determining that the peer is not allowed to join the P2P network, thus controlling the peer to join the P2P network and restricting the peer from joining the P2P network frequently. The route flapping of the P2P network, unavailability or even loss of resources, and DoS of peers caused by frequent attempts of the malicious peer to join the P2P network are overcome to some extent. Compared with the puzzle mechanism in the prior art, the apparatus provided in this embodiment does not need to store a lot of puzzles, saves the overhead significantly, and brings better control effects. The judgment about whether the peer is allowed to join the P2P network may be based on the frequency of receiving the requests, or the stay duration of the peer, or the number of all received requests, or any combination thereof, which is convenient and easy to implement, and flexible.

The embodiments of the present invention may be implemented through software. The software may be stored in a readable storage medium such as a computer hard disk, a cache, or a Compact Disk-Read Only Memory (CD-ROM).

The above descriptions are merely exemplary embodiments of the present invention, but are not intended to limit the present invention.

## Claims

1. A method for controlling a peer to join a Peer-to-Peer, P2P, network, comprising:
receiving (101) a request for joining the P2P network from the peer; and
refusing (104) the peer to join the P2P network if determining that the peer is not allowed to join the P2P network according to history information of the peer joining the P2P network;
wherein the step of refusing (104) the peer to join the P2P network if determining that the peer is not allowed to join the P2P network according to the history information of the peer joining the P2P network comprises:
judging whether the number of requests for joining the P2P network received from the peer within a specified period is higher than a preset first threshold, and, if so, refusing the peer to join the P2P network.

2. The method of claim 1, wherein the step of refusing the peer to join the P2P network further comprises:
judging whether the number of all requests for joining the P2P network received within a specified period is higher than a preset third threshold, and, if so, refusing the peer to join the P2P network.

3. A method for controlling a peer to join a Peer-to-Peer, P2P, network, comprising:
receiving (101) a request for joining the P2P network from the peer; and
refusing (104) the peer to join the P2P network if determining that the peer is not allowed to join the P2P network according to history information of the peer joining the P2P network;
wherein the step of refusing (104) the peer to join the P2P network if determining that the peer is not allowed to join the P2P network according to the history information of the peer joining the P2P network comprises:
judging whether an average duration of the peer staying on the P2P network for multiple times is lower than a preset second threshold, and, if so, refusing the peer to join the P2P network.

4. A method for controlling a peer to join a Peer-to-Peer, P2P, network, comprising:
receiving (101) a request for joining the P2P network from the peer; and
refusing (104) the peer to join the P2P network if determining that the peer is not allowed to join the P2P network according to history information of received requests for joining the P2P network;
wherein the step of refusing the peer to join the P2P network if determining that the peer is not allowed to join the P2P network according to the history information of received requests for joining the P2P network comprises:
judging whether the number of all requests for joining the P2P network received within a specified period is higher than a preset third threshold, and, if so, refusing the peer to join the P2P network.

5. The method of any of claims 1 - 4, wherein after refusing the peer to join the P2P network, the method further comprises:
recording information about this request for joining the P2P network from the peer.

6. The method of any of claims 1 - 4, wherein after refusing the peer to join the P2P network, the method further comprises:
notifying the peer to request to join the P2P network again after a specified period.

7. An apparatus for controlling a peer to join a Peer-to-Peer, P2P, network, comprising:
a receiving module (501), adapted to receive a request for joining the P2P network from the peer; and
a processing module (502), adapted to refuse the peer to join the P2P network if determining that the peer is not allowed to join the P2P network according to history information of the peer joining the P2P network after the receiving module receives the request;
wherein the processing module (502) comprises:
a first processing unit, adapted to: judge whether the number of requests for joining the P2P network received from the peer within a specified period is higher than a preset first threshold after the receiving module receives the request, and, if so, refuse the peer to join the P2P network.

8. An apparatus for controlling a peer to join a Peer-to-Peer, P2P, network, comprising:
a receiving module (501), adapted to receive a request for joining the P2P network from the peer; and
a processing module (502), adapted to refuse the peer to join the P2P network if determining that the peer is not allowed to join the P2P network according to history information of received requests for joining the P2P network after the receiving module receives the request;
wherein the processing module (502) comprises:
a second processing unit, adapted to: judge whether an average duration of the peer staying on the P2P network for multiple times is lower than a preset second threshold after the receiving module receives the request, and, if so, refuse the peer to join the P2P network.

9. An apparatus for controlling a peer to join a Peer-to-Peer, P2P, network, comprising:
a receiving module (501), adapted to receive a request for joining the P2P network from the peer; and
a processing module (502), adapted to refuse the peer to join the P2P network if determining that the peer is not allowed to join the P2P network according to history information of received requests for joining the P2P network after the receiving module receives the request;
wherein the processing module (502) comprises:
a third processing unit, adapted to: judge whether the number of all requests for joining the P2P network received within a specified period is higher than a preset third threshold after the receiving module receives the request, and, if so, refuse the peer to join the P2P network.

10. The apparatus of any of claims 7 - 9, further comprising:
a recording module (503), adapted to record information about this request for joining the P2P network from the peer after the processing module refuses the peer to join the P2P network.

11. The apparatus of any of claims 7 - 9, further comprising:
a notifying module (504), adapted to notify the peer to request to join the P2P network again after a specified period after the processing module refuses the peer to join the P2P network.

## Patentansprüche

1. Verfahren zum Steuern eines "Peers", um sich einem "Peer-to-Peer"-Netz, "P2P"-Netz, anzuschließen, wobei das Verfahren umfasst:
Empfangen (101) einer Anfrage von dem "Peer", sich dem "P2P"-Netz anzuschließen; und
dem "Peer" verweigern (104), sich dem "P2P"-Netz anzuschließen, wenn bestimmt wird, dass der "Peer" gemäß historischer Informationen über die Teilnahme des "Peers" an dem "P2P"-Netz nicht dafür zugelassen ist, sich dem "P2P"-Netz anzuschließen;
wobei der Schritt, dem "Peer" zu verweigern (104), sich dem "P2P"-Netz anzuschließen, wenn bestimmt wird, dass der "Peer" gemäß den historischen Informationen über die Teilnahme des "Peers" an dem "P2P"-Netz nicht dafür zugelassen ist, sich dem "P2P"-Netz anzuschließen, umfasst:
Beurteilen, ob die Anzahl der Anfragen, sich dem "P2P"-Netz anzuschließen, die von dem "Peer" innerhalb einer bestimmten Zeitdauer empfangen wird, größer als ein vorgegebener erster Schwellenwert ist, und, wenn dem so ist, es dann dem "Peer" zu verweigern, sich dem "P2P"-Netz anzuschließen.

2. Verfahren nach Anspruch 1, wobei der Schritt, dem "Peer" zu verweigern, sich dem "P2P"-Netz anzuschließen, ferner umfasst:
Beurteilen, ob die Anzahl aller Anfragen, sich dem "P2P"-Netz anzuschließen, die innerhalb einer bestimmten Zeitdauer empfangen wird, größer als ein vorgegebener dritter Schwellenwert ist, und, wenn dem so ist, es dann dem "Peer" zu verweigern, sich dem "P2P"-Netz anzuschließen.

3. Verfahren zum Steuern eines "Peers", um sich einem "Peer-to-Peer"-Netz, "P2P"-Netz, anzuschließen, wobei das Verfahren umfasst:
Empfangen (101) einer Anfrage von dem "Peer", sich dem "P2P"-Netz anzuschließen; und
dem "Peer" verweigern (104), sich dem "P2P"-Netz anzuschließen, wenn bestimmt wird, dass der "Peer" gemäß historischer Informationen über die Teilnahme des "Peers" an dem "P2P"-Netz nicht dafür zugelassen ist, sich dem "P2P"-Netz anzuschließen;
wobei der Schritt, dem "Peer" zu verweigern (104), sich dem "P2P"-Netz anzuschließen, wenn bestimmt wird, dass der "Peer" gemäß den historischen Informationen über die Teilnahme des "Peers" an dem "P2P"-Netz nicht dafür zugelassen ist, sich dem "P2P"-Netz anzuschließen, umfasst:
Beurteilen, ob eine durchschnittliche Dauer, die der "Peer" in dem "P2P"-Netz mehrere Male verweilt, kleiner als ein vorgegebener zweiter Schwellenwert ist, und, wenn dem so ist, es dann dem "Peer" zu verweigern, sich dem "P2P"-Netz anzuschließen.

4. Verfahren zum Steuern eines "Peers", um sich einem "Peer-to-Peer"-Netz, "P2P"-Netz, anzuschließen, wobei das Verfahren umfasst:
Empfangen (101) einer Anfrage von dem "Peer", sich dem "P2P"-Netz anzuschließen; und
dem "Peer" verweigern (104), sich dem "P2P"-Netz anzuschließen, wenn bestimmt wird, dass der "Peer" gemäß historischer Informationen empfangener Anfragen über die Teilnahme an dem "P2P"-Netz nicht dafür zugelassen ist, sich dem "P2P"-Netz anzuschließen;
wobei der Schritt, dem "Peer" zu verweigern, sich dem "P2P"-Netz anzuschließen, wenn bestimmt wird, dass der "Peer" gemäß den historischen Informationen empfangener Anfragen über die Teilnahme an dem "P2P"-Netz nicht dafür zugelassen ist, sich dem "P2P"-Netz anzuschließen, umfasst:
Beurteilen, ob die Anzahl aller Anfragen, sich dem "P2P"-Netz anzuschließen, die innerhalb einer bestimmten Zeitdauer empfangen wird, größer als ein vorgegebener dritter Schwellenwert ist, und, wenn dem so ist, es dann dem "Peer" zu verweigern, sich dem "P2P"-Netz anzuschließen.

5. Verfahren nach einem der Ansprüche 1 bis 4, wobei, nachdem dem "Peer" verweigert worden ist, sich dem "P2P"-Netz anzuschließen, das Verfahren ferner umfasst:
Aufzeichnen von Informationen über diese Anfrage von dem "Peer", sich dem "P2P"-Netz anzuschließen.

6. Verfahren nach einem der Ansprüche 1 bis 4, wobei, nachdem dem "Peer" verweigert worden ist, sich dem "P2P"-Netz anzuschließen, das Verfahren ferner umfasst:
dem "Peer" mitzuteilen, anzufragen, sich nach einer bestimmten Zeitdauer dem "P2P"-Netz wieder anzuschließen.

7. Vorrichtung zum Steuern eines "Peers", um sich einem "Peer-to-Peer"-Netz, "P2P"-Netz, anzuschließen, wobei die Vorrichtung umfasst:
ein Empfangsmodul (501), das dafür ausgelegt ist, um eine Anfrage von dem "Peer", sich dem "P2P"-Netz anzuschließen, zu empfangen; und
ein Verarbeitungsmodul (502), das dafür ausgelegt ist, um dem "Peer" zu verweigern, sich dem "P2P"-Netz anzuschließen, wenn bestimmt wird, dass der "Peer" gemäß historischer Informationen über die Teilnahme des "Peers" an dem "P2P"-Netz nicht dafür zugelassen ist, sich dem "P2P"-Netz anzuschließen, nachdem das Empfangsmodul die Anfrage erhält;
wobei das Verarbeitungsmodul (502) umfasst:
eine erste Verarbeitungseinheit, die dafür ausgelegt ist, um zu: beurteilen, ob die Anzahl von Anfragen, sich dem "P2P"-Netz anzuschließen, die von dem "Peer" innerhalb einer bestimmten Zeitdauer empfangen wird, größer als ein vorgegebener erster Schwellenwert ist, nachdem das Empfangsmodul die Anfrage empfängt, und, wenn dem so ist, dem "Peer" zu verweigern, sich dem "P2P"-Netz anzuschließen.

8. Vorrichtung zum Steuern eines "Peers", um sich einem "Peer-to-Peer"-Netz, "P2P"-Netz, anzuschließen, wobei die Vorrichtung umfasst:
ein Empfangsmodul (501), das dafür ausgelegt ist, um eine Anfrage von dem "Peer", sich dem "P2P"-Netz anzuschließen, zu empfangen; und
ein Verarbeitungsmodul (502), das dafür ausgelegt ist, um dem "Peer" zu verweigern, sich dem "P2P"-Netz anzuschließen, wenn bestimmt wird, dass der "Peer" gemäß historischer Informationen empfangener Anfragen über die Teilnahme an dem "P2P"-Netz nicht dafür zugelassen ist, sich dem "P2P"-Netz anzuschließen, nachdem das Empfangsmodul die Anfrage erhält;
wobei das Verarbeitungsmodul (502) umfasst:
eine zweite Verarbeitungseinheit, die dafür ausgelegt ist, um zu: beurteilen, ob eine durchschnittliche Dauer, die der "Peer" in dem "P2P"-Netz mehrere Male verweilt, kleiner als ein vorgegebener zweiter Schwellenwert ist, nachdem das Empfangsmodul die Anfrage empfängt, und, wenn dem so ist, dem "Peer" zu verweigern, sich dem "P2P"-Netz anzuschließen.

9. Vorrichtung zum Steuern eines "Peers", um sich einem "Peer-to-Peer"-Netz, "P2P"-Netz, anzuschließen, wobei die Vorrichtung umfasst:
ein Empfangsmodul (501), das dafür ausgelegt ist, um eine Anfrage von dem "Peer", sich dem "P2P"-Netz anzuschließen, zu empfangen; und
ein Verarbeitungsmodul (502), das dafür ausgelegt ist, um dem "Peer" zu verweigern, sich dem "P2P"-Netz anzuschließen, wenn bestimmt wird, dass der "Peer" gemäß historischer Informationen empfangener Anfragen über die Teilnahme an dem "P2P"-Netz nicht dafür zugelassen ist, sich dem "P2P"-Netz anzuschließen, nachdem das Empfangsmodul die Anfrage erhält;
wobei das Verarbeitungsmodul (502) umfasst:
eine dritte Verarbeitungseinheit, die dafür ausgelegt ist, um zu: beurteilen, ob die Anzahl aller Anfragen, sich dem "P2P"-Netz anzuschließen, die innerhalb einer bestimmten Zeitdauer empfangen wird, größer als ein vorgegebener dritter Schwellenwert ist, nachdem das Empfangsmodul die Anfrage empfängt, und, wenn dem so ist, dem "Peer" zu verweigern, sich dem "P2P"-Netz anzuschließen.

10. Vorrichtung nach einem der Ansprüche 7 bis 9, die ferner umfasst:
ein Aufzeichnungsmodul (503), das dafür ausgelegt ist, um Informationen über diese Anfrage von dem "Peer", sich dem "P2P"-Netz anzuschließen, aufzuzeichnen, nachdem das Verarbeitungsmodul dem "Peer" verweigert, sich dem "P2P"-Netz anzuschließen.

11. Vorrichtung nach einem der Ansprüche 7 bis 9, die ferner umfasst:
ein Mitteilungsmodul (504), das dafür ausgelegt ist, dem "Peer" mitzuteilen, anzufragen, sich nach einer bestimmten Zeitdauer dem "P2P"-Netz wieder anzuschließen, nachdem das Verarbeitungsmodul dem "Peer" verweigert, sich dem "P2P"-Netz anzuschließen.

## Revendications

1. Procédé de commande de la jonction d'un poste à un réseau poste à poste, P2P, comprenant :
la réception (101) d'une requête de jonction au réseau P2P émise par le poste ; et
le refus (104) de la jonction du poste au réseau P2P s'il est déterminé que le poste n'est pas autorisé à se joindre au réseau P2P en fonction d'informations historiques du poste voulant se joindre au réseau P2P ;
dans lequel l'étape de refus (104) de la jonction du poste au réseau P2P s'il est déterminé que le poste n'est pas autorisé à se joindre au réseau P2P en fonction des informations historiques du poste voulant se joindre au réseau P2P comprend :
la détermination du fait que le nombre de requêtes de jonction au réseau P2P reçues depuis le poste dans une période spécifiée est supérieur ou non à un premier seuil préétabli, et, dans l'affirmative, le refus de la jonction du poste au réseau P2P.

2. Procédé selon la revendication 1, dans lequel l'étape de refus de la jonction du poste au réseau P2P comprend en outre :
la détermination du fait que le nombre de toutes les requêtes de jonction au réseau P2P reçues dans une période spécifiée est supérieur ou non à un troisième seuil préétabli, et, dans l'affirmative, le refus de la jonction du poste au réseau P2P.

3. Procédé de commande de la jonction d'un poste à un réseau poste à poste, P2P, comprenant :
la réception (101) d'une requête de jonction au réseau P2P émise par le poste ; et
le refus (104) de la jonction du poste au réseau P2P s'il est déterminé que le poste n'est pas autorisé à se joindre au réseau P2P en fonction d'informations historiques du poste voulant se joindre au réseau P2P ;
dans lequel l'étape de refus (104) de la jonction du poste au réseau P2P s'il est déterminé que le poste n'est pas autorisé à se joindre au réseau P2P en fonction des informations historiques du poste voulant se joindre au réseau P2P comprend :
la détermination du fait qu'une durée moyenne de séjour du poste sur le réseau P2P de multiples fois est inférieure ou non à un deuxième seuil préétabli, et, dans l'affirmative, le refus de la jonction du poste au réseau P2P.

4. Procédé de commande de la jonction d'un poste à un réseau poste à poste, P2P, comprenant :
la réception (101) d'une requête de jonction au réseau P2P émise par le poste ; et
le refus (104) de la jonction du poste au réseau P2P s'il est déterminé que le poste n'est pas autorisé à se joindre au réseau P2P en fonction d'informations historiques de requêtes reçues de jonction au réseau P2P ;
dans lequel l'étape de refus de la jonction du poste au réseau P2P s'il est déterminé que le poste n'est pas autorisé à se joindre au réseau P2P en fonction des informations historiques de requêtes reçues de jonction au réseau P2P comprend :
la détermination du fait que le nombre de toutes les requêtes de jonction au réseau P2P reçues dans une période spécifiée est supérieur ou non à un troisième seuil préétabli, et, dans l'affirmative, le refus de la jonction du poste au réseau P2P.

5. Procédé selon l'une quelconque des revendications 1 à 4, comprenant en outre, après le refus de la jonction du poste au réseau P2P :
l'enregistrement d'informations relatives à cette requête de jonction au réseau P2P émise par le poste.

6. Procédé selon l'une quelconque des revendications 1 à 4, comprenant en outre, après le refus de la jonction du poste au réseau P2P :
la notification au poste de requérir à nouveau une jonction au réseau P2P après une période spécifiée.

7. Appareil de commande de la jonction d'un poste à un réseau poste à poste, P2P, comprenant :
un module de réception (501), adapté pour recevoir une requête de jonction au réseau P2P émise par le poste ; et
un module de traitement (502), adapté pour refuser la jonction du poste au réseau P2P s'il est déterminé que le poste n'est pas autorisé à se joindre au réseau P2P en fonction d'informations historiques de jonction du poste au réseau P2P après que le module de réception reçoit la requête ;
dans lequel le module de traitement (502) comprend :
une première unité de traitement, adaptée pour : déterminer que le nombre de requêtes de jonction au réseau P2P reçues depuis le poste dans une période spécifiée est supérieur ou non à un premier seuil préétabli après que le module de réception reçoit la requête, et, dans l'affirmative, refuser la jonction du poste au réseau P2P.

8. Appareil de commande de la jonction d'un poste à un réseau poste à poste, P2P, comprenant :
un module de réception (501), adapté pour recevoir une requête de jonction au réseau P2P émise par le poste ; et
un module de traitement (502), adapté pour refuser la jonction du poste au réseau P2P s'il est déterminé que le poste n'est pas autorisé à se joindre au réseau P2P en fonction d'informations historiques de requêtes reçues de jonction au réseau P2P après que le module de réception reçoit la requête ;
dans lequel le module de traitement (502) comprend :
une deuxième unité de traitement, adaptée pour : déterminer qu'une durée moyenne de séjour du poste sur le réseau P2P de multiples fois est inférieure ou non à un deuxième seuil préétabli après que le module de réception reçoit la requête et, dans l'affirmative, refuser la jonction du poste au réseau P2P.

9. Appareil de commande de la jonction d'un poste à un réseau poste à poste, P2P, comprenant :
un module de réception (501), adapté pour recevoir une requête de jonction au réseau P2P émise par le poste ; et
un module de traitement (502), adapté pour refuser la jonction du poste au réseau P2P s'il est déterminé que le poste n'est pas autorisé à se joindre au réseau P2P en fonction d'informations historiques de requêtes reçues de jonction au réseau P2P après que le module de réception reçoit la requête ;
dans lequel le module de traitement (502) comprend :
une troisième unité de traitement, adaptée pour : déterminer que le nombre de toutes les requêtes de jonction au réseau P2P reçues dans une période spécifiée est supérieur ou non à un troisième seuil préétabli après que le module de réception reçoit la requête et, dans l'affirmative, refuser la jonction du poste au réseau P2P.

10. Appareil selon l'une quelconque des revendications 7 à 9, comprenant en outre :
un module d'enregistrement (503), adapté pour enregistrer des informations relatives à cette requête de jonction au réseau P2P émise par le poste après que le module de traitement refuse la jonction du poste au réseau P2P.

11. Appareil selon l'une quelconque des revendications 7 à 9, comprenant en outre :
un module de notification (504), adapté pour notifier au poste de requérir à nouveau une jonction au réseau P2P après une période spécifiée après que le module de traitement refuse la jonction du poste au réseau P2P.
